# EUROPÄISCHE PATENTSCHRIFT

(11) **EP 1 364 215 B1**
(45) Veröffentlichungstag und Bekanntmachung des Hinweises auf die Patenterteilung: **28.05.2008**
(21) Anmeldenummer: 02708222.1
(22) Anmeldetag: 07.02.2002
(51) Int. Cl.: G01P 1/02, G01D 11/24

(54) **INDUKTIVES BAUELEMENT UND EIN VERFAHREN ZU DESSEN HERSTELLUNG**
INDUCTIVE COMPONENT AND METHOD FOR THE PRODUCTION THEREOF
COMPOSANT INDUCTIF ET METHODE DE SA FABRICATION

(30) Priorität: 20.02.2001 DE 10107869
(43) Veröffentlichungstag der Anmeldung: 26.11.2003
(73) Patentinhaber: ROBERT BOSCH GMBH, 70442 Stuttgart (DE)
(72) Erfinder: KLENK, Mathias, 74369 Loechgau (DE)
(86) Internationale Anmeldenummer: PCT/DE2002/000448
(87) Internationale Veröffentlichungsnummer: WO 2002/066994

(56) Entgegenhaltungen:
- EP-B- 0 632 897
- US-A- 5 572 119

## Beschreibung

### Stand der Technik

Die Erfindung betrifft ein induktives Bauelement, insbesondere einen induktiven Sensor, nach dem Oberbegriff des unabhängigen Vorrichtungsanspruchs und des Verfahrensanspruchs.

Aus der EP 0 632 897 B1 ist ein induktiver Drehzahlsensor bekannt, bei dem eine elektrische Spule in einem Gehäuse so angeordnet ist, dass beispielsweise eine Magnetfeldänderung durch ein rotierendes Teil im Bereich eines Polstiftes des Spulenkerns detektiert werden kann und somit ein Drehzahlsensor aufbaubar ist. Dieser Drehzahlsensor besteht im hier interessierenden Bereich aus einer Stromschiene, dem Anschlussdraht der Spule und der Spule selbst. Es ist hierbei üblich, dass zur Ummantelung dieses Bereichs eine Spritzgussmasse auf den Bereich der Stromschiene, auf dem die Enden der wicklungen der Spule direkt aufgespritzt wird.

Aufgrund der unterschiedlichen Ausdehnungskoeffizienten zwischen der Spritzgussmasse und dem in der Regel aus Kupfer bestehenden Anschlussdrahtes kann zwischen diesen beiden Materialien bei Temperaturänderungen eine Relativbewegung stattfinden. Da somit bei Temperaturwechseln der Spulendraht ständig einer mechanischen Wechselbelastung ausgesetzt ist, kann im Extremfall hier ein Dauerbruch im Bereich zwischen der Stromschiene und der Spule bzw. der Spule-Draht-Stromschiene-Anordnung eintreten, was zum vollständigen Ausfall des induktiven Bauelements führen kann. Bei der eingangs erwähnten bekannten Anordnung wird nachträglich z.B. ein elastisches Gel im Bereich der Anschlussdrähte aufgebracht und anschließend mit einer Folie umwickelt, damit das Gel nicht von der Umspritzmasse weggedrückt wird.

### Vorteile der Erfindung

Bei einem induktiven Bauelement der eingangs angegebenen Art bilden erfindungsgemäß die Anschlussdrähte zwischen der Spule und der jeweiligen Stromschiene in vorteilhafter Weise jeweils einen Verbund aus Wicklungen und Verdrillungen mit einer dazwischen und/oder außen liegenden Folie, wobei die Spritzgussmasse des Gehäuses auf diese Verbünde direkt aufbringbar ist. Bevorzugt besteht dabei der Verbund aus mindestens zwei in Richtung der Führung der Anschlussdrähte angeordneten Wicklungen, die untereinander verdrillt sind. Die Folie kann dabei in vorteilhafter Weise aus Polytetrafluorethylen (PTFE) oder Polyimid (PI) hergestellt sein.

Gemäß einer besonders vorteilhaften Ausführungsform der Erfindung ist das induktive Bauelement ein induktiver Sensor, bei dem die Spule auf einem Magnetkern aufgebracht ist, an dessen einem Polstift eine Magnetfeldänderung durch außen vorbeibewegte Metallteile detektierbar ist. Mit den Stromschienen ist ein elektrisches Signal von der Spule an Anschlüsse einer Kontaktanordnungen am oder im Gehäuse des Bauelements führbar.

Wie eingangs erwähnt, kann ein Temperaturstress im induktiven Bauelement durch unterschiedliche Ausdehnung, insbesondere aufgrund unterschiedlicher Längenausdehnungskoeffizienten der Kunststoff-Umspritzung des Gehäuses und der Spule-Draht-Stromschiene-Anordnung, entstehen. Durch die erfindungsgemäß hineinverdrillte Folie bildet sich um den Wickelverbund ein Schutz aus, der sowohl eine Vorschädigung des Drahtes vermindert oder gar vermeidet und gleichzeitig den Spulendraht gegen eine Vorbelastung durch die Umspritzung schützt. Außerdem gewährleistet der Schutz durch geeignete Materialwahl etwas Spiel und Gleitfähigkeit zwischen dem Anschlussdraht und der Umspritzung bei der temperaturbedingten Ausdehnung.

Nach einem vorteilhaften Verfahren zur Herstellung eines induktiven Bauelements werden die Anschlussdrähte der Spule zur Herstellung der Verdrillung des Verbundes auf Dornen aufgelegt. Zwischen zwei Einzeldrähten kann dabei auf einfache Weise die Folie gelegt werden und nachfolgend kann der Verbund der Anschlussdrähte unter Einbeziehung der Folie verdrillt werden.

Diese und weitere Merkmale von bevorzugten Weiterbildungen der Erfindung gehen außer aus den Ansprüchen auch aus der Beschreibung und den Zeichnungen hervor.

### Zeichnung

Ein Ausführungsbeispiel eines erfindungsgemäßen induktiven Bauelements wird anhand der Zeichnung erläutert. Es zeigen:
Figur 1 einen Schnitt durch einen Drehzahlsensor als induktives Bauelement mit einer Spule,
Figur 2 eine Detailansicht der Wicklungen der Anschlussdrähte der Spule mit einer Folie vor einer Verdrillung,
Figur 3 eine Detailansicht von drei Wicklungen der Spule mit einer zwischenliegenden Folie,
Figur 4 eine Detailansicht von drei bereits verdrillten Windungen und
Figur 5 einen Schnitt durch die verdrillten Windungen nach der Figur 4.

### Beschreibung des Ausführungsbeispiels

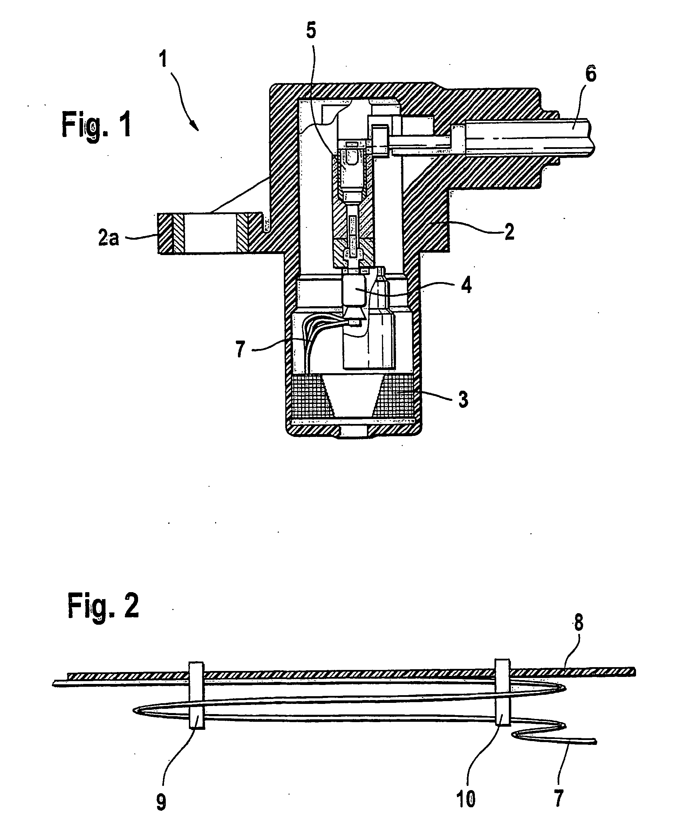

In Figur 1 ist ein Drehzahlsensor 1 gezeigt, der ein im Spritzgussverfahren hergestelltes Gehäuse 2 aufweist. Im Gehäuse 2 befindet sich eine Spule 3 und es sind zwei Stromschienen 4 angeschlossen, wobei in der Figur 1 nur eine sichtbar ist. Die Enden der Stromschienen 4 sind mit einer Kontaktanordnung 5 verbunden, an die eine nach außen führendes Kabel 6 anschließbar ist. Zur mechanischen Befestigung des Drehzahlsensors 1, zum Beispiel an einem Fahrzeuggehäuse, ist am Gehäuse 2 ein flanschartiger Fortsatz 2a eingebettet.

Die spulenseitigen Enden der Stromschienen 4 sind so gestaltet, dass hier eine sichere Kontaktierung der Anschlussdrähte 7 der Spule 3 durchführbar ist. Die Ausführung dieser Anschlussdrähte 7 ist in der Figur 1 nur schematisch gezeichnet. Die erfindungsgemäße Gestaltung der Anschlussdrähte 7 im verdrillten Verbund mit einer Folie wird anhand der nachfolgenden Figuren erläutert. In die Spule 3 ist nach unten, d.h. zu einem nicht dargestellten Zahnrad oder einem sonstigen Rotationskörper, dessen Drehbewegung bestimmt werden soll, ein als sog. Polstift dienender Magnetkern eingebaut, der durch die Spule 3 hindurchragt, wobei der Rotationskörper dabei aus insbesondere magnetisch leitendem Material besteht und in der Spule 3 in an sich bekannter Weise ein Messsignal erzeugt. Der gesamte Spulenkörper wird vorzugsweise in einem Kunststoff-Spritzgussverfahren hergestellt und der Magnetkern bzw. der Polstift sind dann vom Kunststoff umschlossen.

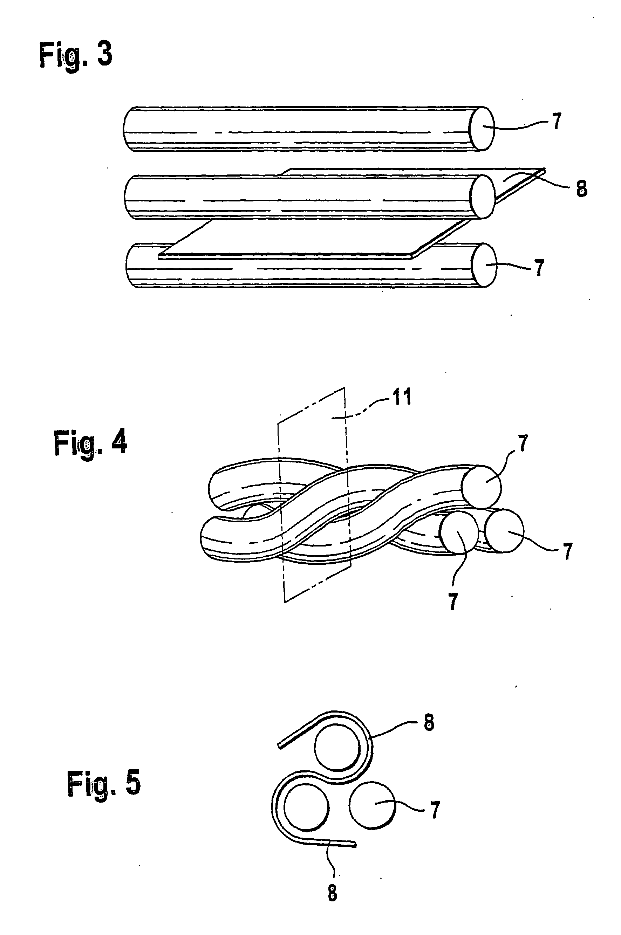

Aus Figur 2 ist im Schnitt eine Folie 8, beispielsweise aus PTFE oder PI, gezeigt, die auf sogenannte Wickeldorne 9 und 10 aufgespießt ist um anschließend ein Teil des wickelverbundes mit den Anschlussdrähten 7 zu werden, die um die Dorne 9 und 10 herumgelegt werden. Die Ausgangslage ist aus Figur 3 zu entnehmen, dabei sind je nach Anzahl der Drähte 7 verschiedene Lagen möglich. Die Folie 8 kann dabei auch zwischen die einzelnen Wickellagen des Drahtes 7 gelegt werden, um ganz spezielle Bereiche im Verbund zu schützen. Die Breite und Dicke der Folie 8 sollte hierbei auf die Fertigungsanlage und die geometrischen Möglichkeiten am Spulenkörper 3 abgestimmt werden.

Die Folie 8 hat die Aufgabe, den Anschlussdraht 7 bzw. die gesamte Drahtverdrillung, wie sie aus Figur 4 erkennbar ist, im Verbund vor dem umschließenden Medium, d.h. hier die Umspritzmasse des Gehäuses 2, zu schützen. Zusätzlich gewährleistet die Folie einen gewissen Spielraum zwischen dem Draht 7 und dem umschließenden Medium, der vor allem bei unterschiedlichen Längenausdehnungskoeffizienten der verwendeten Materialien nötig ist.

Die Herstellung eines hier beispielhaft dreifach verdrillten Drahtverbunds erfolgt derart, dass zunächst ein Stapeln der Drähte 7 mit der Folie 8 vor der Verdrillung erfolgt (Figur 2 und 3). Nachfolgend werden die Drähte 7 samt Folie 8 verdrillt, wobei die Figur 4 den Drillverbund aus Darstellungsgründen ohne die Folie 8 zeigt. Beim Verdrillen wird die Folie 8 zwischen den Drähten 7 eingeklemmt und kann nicht mehr verrutschen.

Ein Schnitt 11 nach der Figur 4 durch den Verdrillverbund zeigt nunmehr in Figur 5 die Lage der Folie 8 im Verbund. Dabei wird deutlich wie der Schutz des gesamten Verbunds erreicht wird. Die Breite der Folie 8 sollte dabei so gewählt werden, dass der Verbund komplett umschlossen wird. Wenn kleine Teile eines der Drähte 7 nicht ganz von der Folie 8 abgedeckt werden, verhindert die Folie 8 dennoch ein festes, form- und kraftschlüssiges Fixieren des Verdrillverbunds durch das umgebende Medium.

## Patentansprüche

1. Induktives Bauelement, mit
- einer in einem Spritzgussgehäuse (2) angeordneten Spule (3) und mit ebenfalls im Gehäuse (2) angebrachten Stromschienen (4), an denen als Anschlussdrähte (7) jeweils die Enden der Spulendrähte kontaktiert sind, **dadurch gekennzeichnet, dass**
- die Anschlussdrähte (7) zwischen der Spule (3) und der.jeweiligen Stromschiene (4) jeweils einen Verbund aus Windungen und Verdrillungen mit einer dazwischen und/oder außen liegenden Folie (8) bilden und dass
- die Spritzgussmasse des Gehäuses (2) auf diese Verbünde direkt aufbringbar ist.

2. Induktives Bauelement nach Anspruch 1, **dadurch gekennzeichnet, dass**
- der Verbund aus mindestens zwei in Richtung der Führung der Anschlussdrähte (7) angeordneten Windungen besteht, die untereinander verdrillt sind.

3. Induktives Bauelement nach Anspruch 1 oder 2, **dadurch gekennzeichnet, dass**
- die Folie (8) aus Polytetrafluorethylen (PTFE) oder Polyimid (PI) hergestellt ist.

4. Induktives Bauelement nach einem der vorhergehenden Ansprüche, **dadurch gekennzeichnet, dass**
- das induktive Bauelemente ein induktiver Sensor ist, bei dem die Spule (3) auf einem Magnetkern aufgebracht ist, an dessen einem Polstift eine Magnetfeldänderung durch außen vorbeibewegte Metallteile detektierbar ist und dass
- mit den Stromschienen (4) ein elektrisches Signal von der Spule (3) an Anschlüsse einer Kontaktanordnung (5) im Gehäuse (2) des Bauelements führbar ist.

5. Verfahren zur Herstellung eines induktiven Bauelements nach einem der vorhergehenden Ansprüche, **dadurch gekennzeichnet, dass**
- die Anschlussdrähte (7) der Spule (3) zur Herstellung der Wicklungen des Verbundes auf Dornen (9,10) aufgewickelt werden, dass
- mindestens zwischen zwei Windungen die Folie (8) gelegt wird und dass
- nachfolgend die Windungen der Anschlussdrähte (7) unter Einbeziehung der Folie (8) verdrillt werden.

## Claims

1. Inductive component, having
- a coil (3) which is arranged in an injection-moulded housing (2), and having busbars (4), which are likewise arranged in the housing (2), and with each of which the ends of the coil wires can make contact, as connecting wires (7), **characterized in that**
- the connecting wires (7) between the coil (3) and the respective busbar (4) each form a group of turns and twists with a sheet (8) located between them and/or on the outside, and **in that**
- the injection-moulded compound of the housing (2) can be applied directly to these groups.

2. Inductive component according to Claim 1, **characterized in that**
- the group comprises at least two turns which are arranged in the direction in which the connecting wires (7) are routed and are twisted with one another.

3. Inductive component according to Claim 1 or 2, **characterized in that**
- the sheet (8) is produced from polytetrafluoroethylene (PTFE) or polyimide (PI).

4. Inductive component according to one of the preceding claims, **characterized in that**
- the inductive component is an inductive sensor in which the coil (3) is fitted on a magnet core, at one of whose pole pins a magnetic-field change caused by metal parts moving past externally can be detected, and **in that**
- the busbars (4) can be used to pass an electrical signal from the coil (3) to connections of a contact arrangement (5) in the housing (2) of the component.

5. Method for producing an inductive component according to one of the preceding claims, **characterized in that**
- the connecting wires (7) of the coil (3) are wound onto mandrels (9, 10) in order to produce the windings of the group, **in that**
- the sheet (8) is placed at least between two turns, and **in that**
- the turns of the connecting wires (7) are then twisted with the sheet (8) being included between them.

## Revendications

1. Composant inductif comportant
- une bobine (3) installée dans un boîtier injecté (2) et ayant des rails électriques (4) également installés dans le boîtier (2) et auxquels sont reliées les extrémités des fils de bobine comme fils de branchement (7),
**caractérisé en ce que**
- les fils de branchement (7) forment entre eux la bobine (3) et les rails électriques (4) respectifs, une combinaison de boucles et de torsions avec un film (8) intermédiaire et/ ou extérieur et
- la masse injectée du boîtier (2) est appliquée directement sur cette combinaison.

2. Composant inductif selon la revendication 1,
**caractérisé en ce que**
- la combinaison se compose d'au moins deux boucles installées dans la direction du guidage des fils de branchement (7) et ces boucles étant torsadées entre elles.

3. Composant inductif selon la revendication 1 ou la revendication 2,
**caractérisé en ce que**
- le film (8) est en polytétrafluoréthylène (PTFE) ou en un polyimide (PI).

4. Composant inductif selon l'une des revendications précédentes,
**caractérisé en ce que**
- le composant inductif est un capteur inductif dont la bobine (3) est installée sur un noyau magnétique et dont une broche polaire permet de détecter une variation de champ magnétique par des pièces métalliques passant à l'extérieur et
- avec les rails électriques (4) on transfère un signal électrique de la bobine (3) aux branchements d'un dispositif de contact (5) dans un boîtier (2) du composant.

5. Procédé de fabrication d'un composant inductif selon l'une des revendications précédentes,
**caractérisé en ce que**
- les fils de branchement (7) de la bobine (3) sont enroulés sur des broches (9, 10) pour réaliser les spires de la combinaison,
- au moins entre deux spires on a le film (8) et
- ensuite les spires des fils de branchement (7) sont torsadées en un intégrant le film (8).
